# EUROPÄISCHE PATENTSCHRIFT

(11) **EP 3 446 946 B1**
(45) Veröffentlichungstag und Bekanntmachung des Hinweises auf die Patenterteilung: **13.04.2022**
(21) Anmeldenummer: 17187786.3
(22) Anmeldetag: 24.08.2017
(51) Int. Cl.: B62B 3/14, B62B 5/00

(54) **EINKAUFSWAGEN**
SHOPPING TROLLEY
CHARIOT DE MAGASIN

(43) Veröffentlichungstag der Anmeldung: 27.02.2019
(73) Patentinhaber: Streicher, Mathias, 6095 Grinzens (AT); Kador, Utz, 6020 Innsbruck (AT)
(72) Erfinder: Streicher, Mathias, 6095 Grinzens (AT); Kador, Utz, 6020 Innsbruck (AT)
(74) Vertreter: Kador & Partner PartG mbB

(56) Entgegenhaltungen:
- EP-A2- 0 133 235
- EP-A2- 2 273 443
- WO-A1-2015/124948
- US-A1- 2004 262 385
- US-A1- 2008 204 224
- US-A1- 2010 264 205

## Beschreibung

Die Erfindung betrifft einen verbesserten Einkaufswagen.

Es ist im Stande der Technik kein Einkaufswagen bekannt, bei dem durch die Anordnung von Bildschirmen bzw. Bildschirmeinheiten eine positive Wirkung auf das Kaufverhalten erreicht werden kann.

In der WO 2015/124948 A1, der EP 0 133 235 A2, der US 2008/0204224 A1 und der US 2010/0264205 A1 sind Einkaufswägen mit Bildschirmen beschrieben. Die Einkaufswägen sind immer nur mit einem Bildschirm ausgestattet.

In der US 2004/0262385 A1 und der EP 2 273 443 A2 sind ebenfalls Einkaufswägen mit einem Bildschirm gezeigt, wobei jedoch der Bildschirm verschiedene nahe aneinander geordnete Bildschirmeinheiten umfasst.

Keines der voran genannten Dokumente befasst sich damit, das Kaufverhalten eines Käufers positiv zu beeinflussen.

Aufgabe der Erfindung ist es, einen Einkaufswagen zu schaffen, mit dem das Kaufverhalten eines Käufers positiv beeinflusst wird.

Unter positiv beeinflusstem Kaufverhalten wird verstanden, dass Versuche zeigen, dass mit dem erfindungsgemäßen Einkaufswagen statistisch relevant mehr Waren gekauft werden als mit einem Einkaufswagen gleicher Art, jedoch ohne die erfindungsgemäßen Merkmale.

Der Erfindung liegt die Erkenntnis zugrunde, dass diese Aufgabe dadurch gelöst werden kann, dass ein Einkaufswagen mit zumindest zwei Bildschirmen bzw. Bildschirmeinheiten ausgestattet ist bzw. dass dem Käufer bildliche und/oder schriftliche Informationen auf zumindest zwei am Einkaufswagen vorgesehenen Bildschirmen bzw. Bildschirmeinheiten übermittelt werden.

Es wird davon ausgegangen, dass beim Betrachten der Bildschirme durch den Käufer eine Verbreiterung des Gesichtsfeldes erfolgt, welche bewirkt, dass der Käufer mehr Waren wahrnimmt und dadurch im Endeffekt auch mehr Waren kauft.

Die positive Beeinflussung des Kaufverhaltens liegt also in erster Linie nicht in der Art der Information. Der positive Effekt kann ebenso erreicht werden, wenn auf den Bildschirmen völlig produktunabhängige Informationen übermittelt werden, wie beispielsweise über Urlaubsorte, Tagesnachrichten oder Comics. Andererseits können Informationen über Sonderangebote, Rabatte oder besondere Produkte zusätzlich positiven Einfluss auf das Kaufverhalten haben. Diese Effekte sind aus der Werbung allgemein bekannt.

Gegenstand der Erfindung gemäß Anspruch 1 ist ein Einkaufswagen, bei dem zumindest zwei, im Abstand voneinander angeordnete Bildschirmeinheiten am Einkaufswagen vorgesehen sind, der dadurch gekennzeichnet ist, dass die einander zugewandten Begrenzungen (8, 8') der Bildschirmeinheiten (2, 2') in einem Abstand von 10-70 cm angeordnet sind, so daß die Informationen dezentralisiert und nicht im Zentrum des Blickfeldes dargeboten werden.

Gegenstand der Erfindung ist ferner ein Verfahren gemäß Anspruch 9. Es handelt sich dabei um ein Verfahren zur positiven Beeinflussung des Kaufverhaltens eines einen Einkaufswagen bedienenden Käufers, wobei dem Käufer bildliche und/oder schriftliche Informationen auf zumindest zwei im Abstand angeordneten Bildschirmeinheiten, die am Einkaufswagen vorgesehen sind, übermittelt werden.

Auf diese Weise werden die Informationen dezentralisiert dargeboten, d.h. nicht im Zentrum des Blickfeldes.

Da die Bildschirme im Abstand angeordnet sind und auf diesen Informationen erscheinen, ist der Käufer gezwungen sein Gesichtsfeld zu erweitern, was sich positiv auf das Kaufverhalten auswirkt. Insbesondere ist es vorteilhaft, wenn die Bildschirme seitlich, das heißt senkrecht zur Schieberichtung des Wagens im Abstand angeordnet sind.

Es ist offensichtlich, dass die gleiche Wirkung, die mit zwei im Abstand angeordneten Bildschirmen erreicht wird, durch einen länglichen Bildschirm erzielt werden kann, auf dem die Informationen im Abstand in Längsrichtung des Bildschirms gezeigt werden. Aus diesem Grund wurde die Bezeichnung "Bildschirmeinheit" gewählt, worunter entweder ein einzelner Bildschirm oder ein Teil eines Bildschirms zu verstehen ist. Auf diesen Bildschirmeinheiten werden Informationen gezeigt.

Vorzugsweise sind die Bildschirmeinheiten jeweils im linken bzw. im rechten Teil des Einkaufswagens angeordnet. Es kommt aber auch in Betracht, sie im vorderen bzw. im hinteren Teil anzuordnen.

Eine besonders vorteilhafte Anordnung der Bildschirmeinheiten ist dermaßen, dass diese seitlich von Schiebegriffen und hin zur Wagenmitte angeordnet sind oder bei Verwendung einer Schiebestange zwischen dieser und dem hinteren Rand des Warenkorbes.

Der Abstand in dem die Bildschirmeinheiten angeordnet sind, ist einmal durch die Dimensionen des Einkaufswagens begrenzt und hängt zum anderen von der Größe der Bildschirmeinheit ab. Geeignete Abstände, wobei auf die einander zugewandten Begrenzungen der Bildschirmeinheiten Bezug genommen wird, liegen bei 10-70 cm, bevorzugt bei 10-60 cm, 20-50 cm, 25-45 cm und 30-40 cm. Bei der Ausführungsform mit einem länglichen Bildschirm erstreckt sich dieser vorzugsweise von dem linken bis zum rechten Teil des Einkaufswagens, insbesondere zwischen seitlichen Schiebegriffen bzw. bei einer waagerechten Schiebestange zwischen dieser und dem Rand des Warenkorbes des Einkaufswagens.

Eine weitere bevorzugte Ausführungsform, insbesondere im Hinblick auf das positive Kaufverhalten, ist dadurch gekennzeichnet, dass seitliche Schiebegriffe vorgesehen sind, deren Greifbereich in Längsrichtung des Einkaufswagens oder einem Winkel bis zu 45°, bevorzugt 30°, zur Längsrichtung des Einkaufswagens in horizontaler oder vertikaler Richtung angeordnet ist.

Wie vorgenannt, können dem Käufer produktbezogene bzw. auf seinen Einkauf bezogene Informationen gezeigt werden. Es kommt aber auch in Betracht, völlig andere Informationen, wie allgemeine Werbung, Bilder von Landschaften, Blumen oder Comics zu zeigen.

Vorzugsweise werden auf den Bildschirmeinheiten unterschiedliche Informationen übermittelt, so dass der Käufer einmal auf die eine und dann wieder auf die andere Bildschirmeinheit blickt. Ein Wechsel des

Blickes kann auch dadurch gefördert werden, dass abwechselnd Informationen auf der einen bzw. der anderen Bildschirmeinheit gezeigt werden.

Vorzugsweise ist der Einkaufswagen mit einem Verortungssystem bzw. Lokalisationssystem ausgestattet, das heißt, dass das System weiß in welcher örtlichen Position sich der Einkaufswagen im Supermarkt befindet. Dadurch wird der weitere Vorteil erreicht, dass dem Käufer gezielte Informationen bezüglich Waren mitgeteilt werden, in deren Nähe er sich gerade befindet. Sinnigerweise werden auf der linken Bildschirmeinheit Informationen übermittelt bezüglich Waren, die sich auf der linken Seite im Regal befinden. Entsprechend auf der anderen Seite. So kann beispielsweise die Information lauten: "Im Regal links unten Waschmittel XY in der 10 Liter Packung zum Sonderpreis ...".

Bei einem länglichen Bildschirm werden in gleicher Weise Informationen im Abstand voneinander gezeigt. Damit wird genauso erreicht, dass der Käufer einmal die eine, dann die andere Information wahrnimmt und dadurch der Blickbereich vergrößert wird.

Die gezeigten Informationen können sowohl bildlicher als auch schriftlicher Art sein.

Es kommt auch in Betracht mehr als zwei Bildschirmeinheiten vorzusehen, beispielsweise vier, wobei diese beispielsweise an den vier Ecken des Einkaufswagens angeordnet sind.

Bei einem länglichen Bildschirm ist es vorteilhaft, wenn sich dieser bei vorgesehenen seitlichen Griffen von dem einen Griff zum anderen Griff erstreckt.

Die Bildschirme können durch Solarpanele oder Batterien betrieben werden. Die Bildschirme sind vorzugsweise mit einem Gehäuse geschützt.

Die Bildschirme können mit TFT oder e-ink Technologien ausgestattet sein. Ein Rechner ist im Bildschirm oder an einer geeigneten Stelle des Einkaufswagens vorgesehen. Die Informationen können über Internet oder WLAN übermittelt werden.

### Versuch

Der folgende Versuch zeigt deutlich, in welchem überraschenden Ausmaß erfindungsgemäße Einkaufswägen das Kaufverhalten von Käufern in einem Supermarkt positiv beeinflussen.

192 Käufer mit einem mittleren Alter von 53 Jahren wovon 75% weiblich waren, wurden vor dem Eingangsbereich eines großen Supermarktes mit ca. 3000 m² Verkaufsfläche für eine Konsumstudie rekrutiert und einer von drei Versuchsgruppen per Zufall zugeteilt. Die Versuchsgruppen waren "Aufmerksamkeit eng", "Aufmerksamkeit breit" und "Kontrollgruppe".

Vor dem Betreten des Supermarktes gaben alle Käufer ihre geplanten Einkäufe auf Kategorieebene an, z.B. Butter, Schokolade oder Wein. Alle drei Gruppen hatten den gleichen Einkaufswagen, wobei bei der Gruppe "Aufmerksamkeit eng" hinter der Schiebestange ein iPad in der Mitte angeordnet war, bei der Gruppe "Aufmerksamkeit breit" zwei iPads hinter der Schiebestange in einem Abstand von 20 cm angeordnet waren und bei der "Kontrollgruppe" zwar ebenfalls ein iPad in der Mitte vorgesehen war, auf dem jedoch keine Informationen gezeigt wurden.

Bei den ersten beiden Gruppen wurden auf dem bzw. den iPads 20 gewöhnliche Produkte in sequentieller Folge gezeigt, wie Nudeln, Schreibblock, Milch. Die Produkte hatten ungefähr einen Durchmesser von 3,5 cm und wurden für jeweils 2 Sekunden gezeigt.

Nach dem Bezahlen an der Kasse wurden die Käufer erneut kontaktiert und die tatsächlichen Einkäufe und Ausgaben notiert.

In der Analyse zeigte sich, dass die Gruppe mit "Aufmerksamkeit breit" signifikant mehr Produkte ungeplant eingekauft hatte als die Gruppe "Aufmerksamkeit eng" und zwar jeweils in Mittelwerten 4,44 gegenüber 3,00. Bei der "Kontrollgruppe" war der Mittelwert 2,69. Dieser Effekt war auch bei den Ausgaben signifikant. Die Gruppe "Aufmerksamkeit breit" gab ungeplant wesentlich mehr Geld aus, nämlich im Mittel EUR 10,60, während die Gruppe "Aufmerksamkeit eng" im Mittel EUR 6,31 ausgab und die "Kontrollgruppe" EUR 6,08. Die Mehrausgaben bei der Versuchsgruppe "Aufmerksamkeit breit" waren somit um 74 % höher als bei der "Kontrollgruppe".

In Summe lässt sich festhalten, dass mit dem erfindungsgemäßen Einkaufswagen eine überraschend positive Beeinflussung des Kaufverhaltens erreicht werden kann. Der Effekt ist nicht auf die Wahrnehmung bestimmter Produkte zuzuführen, da beide Gruppen "Aufmerksamkeit breit" bzw. "Aufmerksamkeit eng" identische Produkte sahen, sondern aufgrund der unterschiedlichen Darstellung, nämlich zentriert bzw. im räumlichen Abstand. Der Effekt ist originär, da der Kaufanstieg auch im Vergleich zur "Kontrollgruppe" eintrat.

Die Erfindung wird nachstehend anhand der Zeichnungen näher erläutert:

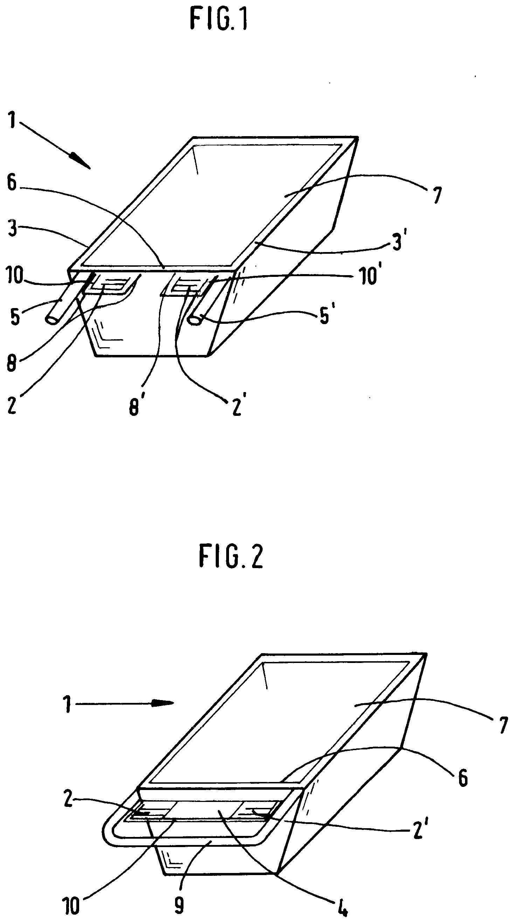

Figur 1 zeigt einen Einkaufswagen (1) mit zwei Bildschirmeinheiten (2, 2'), die neben seitlichen Schiebegriffen (5, 5') hin zur Wagenmitte angeordnet sind. Die Bildschirmeinheiten (2, 2') sind jeweils im linken bzw. im rechten Teil (3, 3') des Einkaufswagens (1) angeordnet. Die Begrenzungen der Bildschirmeinheiten (8, 8') sind im Abstand voneinander angeordnet. Die Bildschirmeinheiten (2, 2') sind mit Gehäusen (10, 10') zum Schutz versehen.
Figur 2 zeigt eine Ausführungsform mit einem länglichen Bildschirm (4) auf dem zwei Bildschirmeinheiten (2, 2') vorgesehen sind. Der längliche Bildschirm (4) ist hinter der Schiebestange (9) vor dem hinteren Rand (6) des Warenkorbes (7) angeordnet.

### Bezugszeichenliste

- 1: Einkaufswagen
- 2, 2': Bildschirmeinheit
- 3, 3': linker Teil bzw. rechter Teil des Einkaufswagens
- 4: länglicher Bildschirm
- 5, 5': Schiebegriffe
- 6: hinterer Rand
- 7: Warenkorb
- 8, 8': Begrenzung der Bildschirmeinheit
- 9: Schiebestange
- 10, 10': Gehäuse

## Patentansprüche

1. Einkaufswagen, bei dem zumindest zwei, im Abstand voneinander angeordnete Bildschirmeinheiten (2, 2') am Einkaufswagen (1) vorgesehen sind, **dadurch gekennzeichnet, dass** die einander zugewandten Begrenzungen (8, 8') der Bildschirmeinheiten (2, 2') in einem Abstand von 10-70 cm angeordnet sind, so daß die Informationen dezentralisiert und nicht im Zentrum des Blickfeldes dargeboten werden.

2. Einkaufswagen nach Anspruch 1, **dadurch gekennzeichnet, dass** die Bildschirmeinheiten (2, 2') jeweils im linken bzw. rechten Teil (3, 3') des Einkaufswagens (1) angeordnet sind.

3. Einkaufswagen nach einem der Ansprüche 1 bis 2, **dadurch gekennzeichnet, dass** die Bildschirmeinheiten (2, 2') zwischen seitlichen Schiebegriffen (5, 5') bzw. zwischen Schiebestange (9) und hinterem Rand (6) des Warenkorbes (7) des Einkaufswagens (1) angeordnet sind.

4. Einkaufswagen nach einem der Ansprüche 1 bis 3, **dadurch gekennzeichnet, dass** die einander zugewandten Begrenzungen (8, 8') der Bildschirmeinheiten (2, 2') in einem Abstand von 10-60 cm, bevorzugt 20-50 cm, weiter bevorzugt 25-45 cm und weiter bevorzugt 30-40 cm angeordnet sind.

5. Einkaufswagen nach einem der Ansprüche 1 bis 4, **dadurch gekennzeichnet, dass** ein länglicher Bildschirm (4) mit zwei im Abstand angeordneten Bildschirmeinheiten (2, 2') am Einkaufswagen (1) vorgesehen ist.

6. Einkaufswagen nach Anspruch 5, **dadurch gekennzeichnet, dass** der längliche Bildschirm (4) sich vom linken bis zum rechten Teil (3, 3') des Einkaufswagens (1) erstreckt.

7. Einkaufswagen nach einem der Ansprüche 1 bis 6, **dadurch gekennzeichnet, dass** der Einkaufswagen mit einem Verortungssystem ausgestattet ist.

8. Einkaufswagen nach einem der Ansprüche 1 bis 7, **dadurch gekennzeichnet, dass** der Greifbereich der seitlichen Schiebegriffe (5, 5') in Längsrichtung des Einkaufswagens (1) und in einem Winkel von bis zu 45°, bevorzugt 30°, zur Längsrichtung des Einkaufwagens (1) in horizontaler und/oder vertikaler Richtung angeordnet ist.

9. Verfahren zur positiven Beeinflussung des Kaufverhaltens eines einen Einkaufwagen (1) bedienenden Käufers, **dadurch gekennzeichnet, dass** dem Käufer bildliche und/oder schriftliche Informationen auf zumindest zwei im Abstand angeordneten Bildschirmeinheiten (2, 2'), die am Einkaufwagen (1) nach einem der Ansprüche 1 bis 8 vorgesehen sind, übermittelt werden.

10. Verfahren nach Anspruch 9, **dadurch gekennzeichnet, dass** dem Käufer unterschiedliche Informationen auf den Bildschirmeinheiten (2, 2') übermittelt werden.

11. Verfahren nach einem der Ansprüche 9 oder 10, **dadurch gekennzeichnet, dass** dem Käufer abwechselnd Informationen auf den Bildschirmeinheiten (2, 2') übermittelt werden.

12. Verfahren nach einem der Ansprüche 9 bis 11, **dadurch gekennzeichnet, dass** dem Käufer Informationen über Sonderangebote, Rabatte und/oder besondere Produkte übermittelt werden.

13. Verfahren nach einem der Ansprüche 9 bis 12, **dadurch gekennzeichnet, dass** dem Käufer warenspezifische Informationen entsprechend der örtlichen Position des Einkaufwagens übermittelt werden.

14. Verfahren nach einem der Ansprüche 9 bis 13, **dadurch gekennzeichnet, dass** auf einem länglichen Bildschirm die Informationen im Abstand voneinander auf den angeordneten Bildschirmeinheiten (2, 2') übermittelt werden.

## Claims

1. A shopping cart for which at least two screen units (2, 2') disposed spaced apart from each other are provided on the shopping cart (1), **characterized in that** the boundaries (8, 8') of the screen units (2, 2') facing each other are disposed spaced apart by 10-70 cm, so that the information is presented in a decentralized manner and not in the center of the field of view.

2. The shopping cart according to claim 1, **characterized in that** the screen units (2, 2') are each disposed in the left or right part (3, 3') of the shopping cart (1).

3. The shopping cart according to any one of the claims 1 through 2, **characterized in that** the screen units (2, 2') are disposed between side sliding handles (5, 5') or between sliding bars (9) and the rear edge (6) of the shopping basket (7) of the shopping cart (1).

4. The shopping cart according to any one of the claims 1 through 3, **characterized in that** the boundaries (8, 8') of the screen units (2, 2') facing each other are disposed spaced apart by 10-60 cm, preferably 20-50 cm, further preferably 25-45 cm, and further preferably 30-40 cm.

5. The shopping cart according to any one of the claims 1 through 4, **characterized in that** an elongated screen (4) having two screen units (2, 2') disposed spaced apart is provided on the shopping cart (1).

6. The shopping cart according to claim 5, **characterized in that** the elongated screen (4) extends from the left to the right part (3, 3') of the shopping cart (1).

7. The shopping cart according to any one of the claims 1 through 6, **characterized in that** the shopping cart is equipped with a location system.

8. The shopping cart according to any one of the claims 1 through 7, **characterized in that** the gripping range of the side sliding handles (5, 5') is disposed in the longitudinal direction of the shopping cart (1) and at an angle of up to 45°, preferably 30°, to the longitudinal direction of the shopping cart (1) in the horizontal and/or vertical direction.

9. A method for positively influencing the shopping behavior of a shopper operating a shopping cart (1), **characterized in that** images and/or written information is presented to the buyer on at least two screen units (2, 2') disposed spaced apart and provided on the shopping cart (1) according to any one of the claims 1 through 8.

10. The method according to claim 9, **characterized in that** different information is presented to the shopper on the screen units (2, 2').

11. The method according to any one of the claims 9 or 10, **characterized in that** varying information is presented to the shopper on the screen units (2, 2').

12. The method according to any one of the claims 9 through 11, **characterized in that** information about special offers, discounts, and/or special products is presented to the shopper.

13. The method according to any one of the claims 9 through 12, **characterized in that** goods-specific information is presented to the shopper according to the local position of the shopping cart.

14. The method according to any one of the claims 9 through 13, **characterized in that** the information is presented on the screen units (2, 2') disposed spaced apart from each other on an elongated screen.

## Revendications

1. Chariot de courses, dans lequel au moins deux unités d'écran (2, 2') disposées à distance l'une de l'autre sont prévues sur le chariot de courses (1), **caractérisé en ce que** les limitations (8, 8') des unités d'écran (2, 2'), qui se font face mutuellement, sont disposées à une distance de 10 à 70 cm, de sorte que les informations sont décentralisées et ne sont pas présentées au centre du champ visuel.

2. Chariot de courses selon la revendication 1, **caractérisé en ce que** les unités d'écran (2, 2') sont disposées respectivement dans les parties gauche et droite (3, 3') du chariot de courses (1).

3. Chariot de courses selon l'une quelconque des revendications 1 à 2, **caractérisé en ce que** les unités d'écran (2, 2') sont disposées entre des poignées de poussée latérales (5, 5') ou entre la barre de poussée (9) et le bord arrière (6) du panier d'achats (7) du chariot de courses (1).

4. Chariot de courses selon l'une quelconque des revendications 1 à 3, **caractérisé en ce que** les limitations (8, 8') des unités d'écran (2, 2'), qui se font face mutuellement, sont disposées à une distance de 10 à 60 cm, de préférence de 20 à 50 cm, de manière plus préférée de 25 à 45 cm et, de manière encore plus préférée, de 30 à 40 cm.

5. Chariot de courses selon l'une quelconque des revendications 1 à 4, **caractérisé en ce qu'**un écran allongé (4) avec deux unités d'écran (2, 2') disposées à distance l'une de l'autre est prévu sur le chariot de courses (1).

6. Chariot de courses selon la revendication 5, **caractérisé en ce que** l'écran allongé (4) s'étend de la partie gauche à la partie droite (3, 3') du chariot de courses (1).

7. Chariot de courses selon l'une quelconque des revendications 1 à 6, **caractérisé en ce que** le chariot de courses est équipé d'un système de localisation.

8. Chariot de courses selon l'une quelconque des revendications 1 à 7, **caractérisé en ce que** la zone de préhension des poignées de poussée latérales (5, 5') est disposée dans le sens horizontal et/ou le sens vertical dans la direction longitudinale du chariot de courses (1) et à un angle allant jusqu'à 45°, de préférence 30°, par rapport à la direction longitudinale du chariot de courses (1).

9. Procédé pour influencer positivement le comportement d'achat d'un acheteur utilisant un chariot de courses (1), **caractérisé en ce que** des informations sous forme d'images et/ou écrites sont transmises à l'acheteur sur au moins deux unités d'écran (2, 2') disposées à distance l'une de l'autre, qui sont prévues sur le chariot de courses (1) selon l'une quelconque des revendications 1 à 8.

10. Procédé selon la revendication 9, **caractérisé en ce que** des informations différentes sont transmises à l'acheteur sur les unités d'écran (2, 2').

11. Procédé selon l'une quelconque des revendications 9 ou 10, **caractérisé en ce que** des informations sont transmises à l'acheteur à tour de rôle sur les unités d'affichage (2, 2').

12. Procédé selon l'une quelconque des revendications 9 à 11, **caractérisé en ce que** des informations sur des offres spéciales, des réductions et/ou des produits particuliers sont transmises à l'acheteur.

13. Procédé selon l'une quelconque des revendications 9 à 12, **caractérisé en ce que** des informations spécifiques aux marchandises sont transmises à l'acheteur en fonction de la position locale du chariot de courses.

14. Procédé selon l'une quelconque des revendications 9 à 13, **caractérisé en ce que** sur un écran allongé les informations sont transmises à distance les unes des autres sur les unités d'écran (2, 2') disposées.
